# EUROPEAN PATENT APPLICATION

(11) **EP 4 400 257 A1**
(43) Date of publication of application: **17.07.2024**
(21) Application number: 21956702.1
(22) Date of filing: 07.09.2021
(51) Int. Cl.: B23Q 1/00, B23Q 1/01, F16M 7/00

(54) **MACHINE TOOL**

(71) Applicant: DMG Mori Co., Ltd., Yamatokoriyama-shi, Nara 639-1160 (JP)
(72) Inventor: KIMURA Yuki, Yamatokoriyama-shi Nara 639-1160 (JP); HIEI Kento, Yamatokoriyama-shi Nara 639-1160 (JP)
(74) Representative: Grünecker Patent- und Rechtsanwälte PartG mbB
(86) International application number: PCT/JP2021/032813
(87) International publication number: WO 2023/037402

(57) **Abstract**

A machine tool (100) includes: a bed (5); first and second movable bodies (10, 20) supported so as to be movable with respect to the bed (5); and first to fourth jacks (J1 to J4) configured to support the bed (5). A moving range (RG1) of a gravity center of the first movable body (10) is confined within a first triangle (T1) in which three of the first to fourth jacks (J1 to J4) are at vertices thereof when the machine tool (100) is viewed from the top. A moving range (RG2) of a gravity center of the second movable body (20) is confined within a second triangle (T2) in which three of the first to fourth jacks (J1 to J4) are at vertices thereof when the machine tool (100) is viewed from the top. A combination of the three jacks forming the first triangle (T1) and a combination of the three jacks forming the second triangle (T2) differ from each other.

## Description

### Technical Field

The present disclosure relates to a machine tool with a bed on which a movable body is provided.

### Background Art

JP 2020-075298A (Patent Document 1) discloses a machine tool that includes a bed. The bed is supported by three or more supporting devices. The supporting devices are configured to be movable in an up/down direction. The positions of the supporting devices are adjusted so that the reference plane of the bed is horizontal.

### Citation List

### Patent Document

Patent Document 1: JP 2020-075298A

### Summary of Invention

### Technical Problem

The bed of the machine tool is provided with a movable body such as a spindle. When the movable body moves on the bed, the weight applied to the supporting devices changes. This causes a slight change in bending of the bed. This change affects accuracy in processing of a workpiece. Therefore, technology to make the bed more stable is desired. Note that Patent Document 1 does not disclose this technology.

### Solution to Problem

According to one example of the present disclosure, a machine tool includes: a bed; first and second movable bodies supported so as to be movable with respect to the bed; and first to fourth jacks configured to support the bed. A moving range of a gravity center of the first movable body is confined within a first triangle in which three of the first to fourth jacks are disposed at vertices thereof when the machine tool is viewed from the top. A moving range of a gravity center of the second movable body is confined within a second triangle in which three of the first to fourth jacks are disposed at vertices thereof when the machine tool is viewed from the top. A combination of the three jacks forming the first triangle and a combination of the three jacks forming the second triangle differ from each other.

According to one example of the present disclosure, the machine tool further includes a first rib. Two ends of the first rib are coupled to, among the first to fourth jacks, jacks located in first opposing corners.

According to one example of the present disclosure, the machine tool further includes a second rib. Two ends of the second rib are coupled to, among the first to fourth jacks, jacks located in second opposing corners. The first opposing corners and the second opposing corners differ from each other.

According to one example of the present disclosure, the first movable body includes a tool spindle for rotating a tool. The second movable body includes a tool rest for holding a plurality of tools.

According to one example of the present disclosure, the machine tool further includes a third movable body supported so as to be movable with respect to the bed. A moving range of a gravity center of the third movable body is confined within the second triangle when the machine tool is viewed from the top.

According to one example of the present disclosure, the third movable body includes a workpiece spindle for rotating a workpiece.

According to one example of the present disclosure, the machine tool further includes: a first drive unit configured to move the first movable body; and a control unit configured to control the machine tool. The control unit executes processing for controlling the first drive unit so that the moving range of the gravity center of the first movable body while a tool is processing a workpiece is confined within the first triangle.

According to one example of the present disclosure, the machine tool further includes a second drive unit configured to move the second movable body. The control unit further executes processing for controlling the second drive unit so that the moving range of the gravity center of the second movable body while the tool is processing the workpiece is confined within the second triangle.

The above-described object, other objects, features, aspects, and advantages of the present invention will be clarified by the following detailed description of the present invention to be understood in connection with the attached drawings.

### Brief Description of the Drawings

FIG. 1 is a diagram showing an appearance of a machine tool.
FIG. 2 is a diagram showing the main body of a processing machine provided inside the machine tool.
FIG. 3 is a diagram showing an underside of a bed shown in FIG. 2.
FIG. 4 is a diagram showing examples of moving ranges of movable bodies.
FIG. 5 is a diagram showing examples of moving ranges of movable bodies.
FIG. 6 is a diagram showing examples of drive mechanisms of the machine tool.
FIG. 7 is a diagram showing an example of a hardware configuration of a computer numerical control (CNC) unit.
FIG. 8 is a flowchart showing a flow of processing of restricting moving ranges of movable bodies.

### Description of Embodiments

The following describes an embodiment according to the present invention with reference to the drawings. In the following description, the same components and the same constitutional elements are denoted by the same reference numeral. Those components and constitutional elements have the same name and the same function. Accordingly, detailed descriptions of those components and constitutional elements are not repeated. The following embodiment and modification can be selectively combined as appropriate.

### A. Machine Tool 100

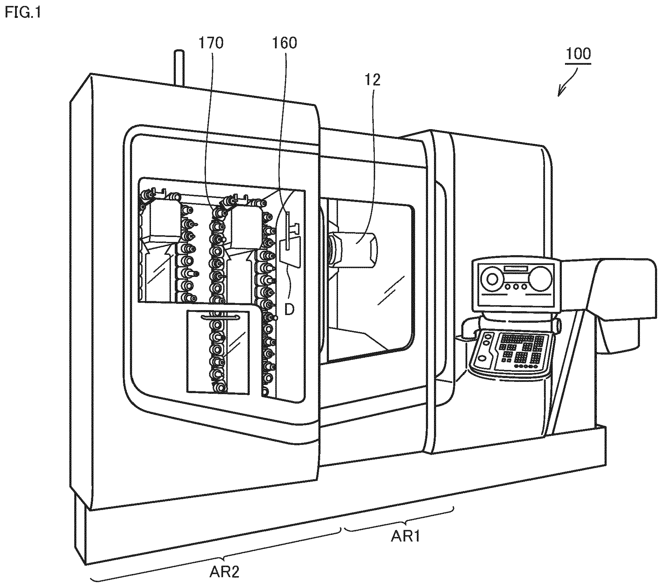

First, a machine tool 100 according to an embodiment is described with reference to FIG. 1. FIG. 1 is a diagram showing an appearance of the machine tool 100.

The "machine tool" as used in the present specification is a concept that encompasses various apparatuses having functions for processing a workpiece. In the present specification, a description is given taking, as an example of the machine tool 100, a complex processing machine having a processing function of a turning center and a processing function of a machining center, but the machine tool 100 is not limited to this. For example, the machine tool 100 may also be a horizontal or vertical machining center. Alternatively, the machine tool 100 may be a turning center. Alternatively, the machine tool 100 may be an additive processing machine. Alternatively, the machine tool 100 may be any other cutting machine or griding machine.

The machine tool 100 shown in FIG. 1 is a complex processing machine having a lathe turning function of bringing a tool into contact with a rotating workpiece to process the workpiece, and a milling function of bringing a rotating tool into contact with a workpiece to process the workpiece.

The machine tool 100 includes a processing area AR1 and a tool area AR2. The processing area AR1 and the tool area AR2 are separate compartments each provided with a cover. A tool spindle 12 is provided in the processing area AR1. An automatic tool changer (ATC) 160 and a magazine 170 are provided in the tool area AR2. The magazine 170 houses various tools for use in processing of workpieces. The tools housed in the magazine 170 are attached to the tool spindle 12 via a door D, which is provided as a partition between the processing area AR1 and the tool area AR2. The door D is a sliding type door and is opened and closed by a drive source such as a motor.

### B. Internal Configuration of Machine Tool 100

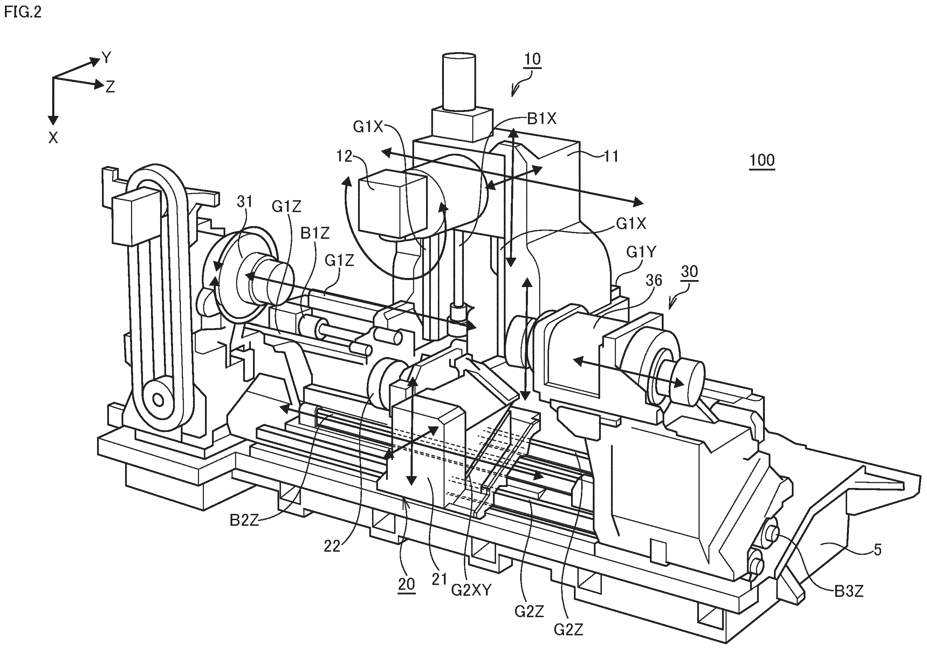

Next, an example of an internal configuration of the machine tool 100 is described with reference to FIG. 2. FIG. 2 is a diagram showing the main body of a processing machine provided inside the machine tool 100.

Hereinafter, for ease of description, the direction of gravity (vertical direction) will be referred to also as an X direction. Also, one direction on the horizontal plane will be referred to as a Y direction. Also, a direction orthogonal to both the X direction and the Y direction will be referred to as a Z direction. The Z direction is one direction on the horizontal plane.

The machine tool 100 includes a bed 5. The bed 5 is a base member for supporting various components of the machine tool 100, and is installed on a floor surface of a factory or the like. The bed 5 is made of metal such as cast iron.

Various movable bodies are provided on the bed 5. The "machine tool" as used in the present specification is a concept that encompasses various units configured to be movable on the bed 5. A movable body includes, for example, at least one of a tool spindle for rotating a tool, a tool rest configured to be able to hold a plurality of tools, a workpiece spindle for rotating a workpiece, and an opposing workpiece spindle configured to support the workpiece from the opposite side of that workpiece spindle so that the workpiece can rotate.

In the example of FIG. 2, movable bodies 10, 20, and 30 are provided on the bed 5. The movable bodies 10, 20, and 30 are provided on the bed 5 so as to be movable. Note that FIG. 2 shows an example in which three movable bodies 10, 20, and 30 are provided, but the number of movable bodies provided on the bed 5 may be two, or four or more.

The movable body 10 includes, for example, a column 11 and the tool spindle 12. The column 11 is provided on the bed 5 and supports the tool spindle 12. The tool spindle 12 is configured to be able to hold a tool for cutting a workpiece. The tool spindle 12 is configured to be movable in, for example, the X, Y, and Z directions.

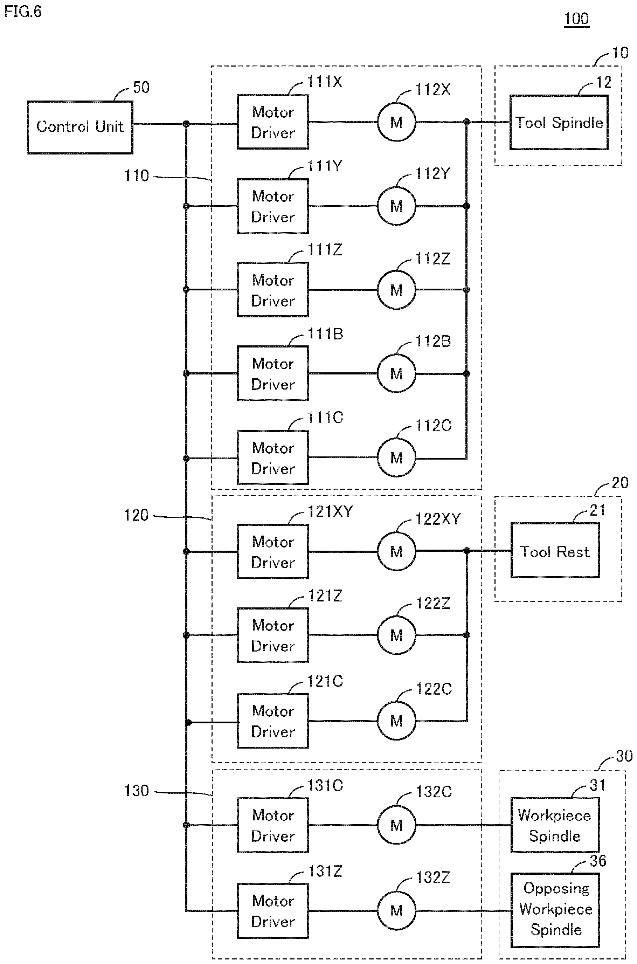

The movable body 10 includes a guide G1Z serving as a drive mechanism for driving the tool spindle 12 in the Z direction. The guide G1Z is composed of, for example, two rails and functions as a guide surface for guiding the tool spindle 12 in the Z direction. The rails are provided in parallel to the Z direction. A ball screw B1Z is provided between the rails. The ball screw B1Z is provided in parallel to the guide G1Z. Also, a later-described motor 112Z (see FIG. 6) is connected to the ball screw B1Z. The motor 112Z drives the ball screw B1Z to move the tool spindle 12 to a desired position in the Z direction.

A guide G1Y is provided on the guide G1Z. The guide G1Y is composed of, for example, two rails and functions as a guide surface for guiding the tool spindle 12 in the Y direction. The rails are provided in parallel to the Y direction. A ball screw (not shown) is provided between the rails. The ball screw is provided in parallel to the guide G1Y. Also, a later-described motor 112Y (see FIG. 6) is connected to the ball screw. The motor 112Y drives the ball screw to move the tool spindle 12 to a desired position in the Y direction.

A guide G1X is provided inside the column 11. The guide G1X is composed of, for example, two rails and functions as a guide surface for guiding the tool spindle 12 in the X direction. The rails are provided in parallel to the X direction. A ball screw B1X is provided between the rails. The ball screw B1X is provided in parallel to the guide G1X. Also, a later-described motor 112X (see FIG. 6) is connected to the ball screw B1X. The motor 112X drives the ball screw B1X to move the tool spindle 12 to a desired position in the X direction.

Also, a later-described motor 112B (see FIG. 6) is connected to the tool spindle 12. The motor 112B turns the tool spindle 12 with the Y direction being the center of rotation.

Also, a later-described motor 112C (see FIG. 6) is connected to the tool spindle 12. The motor 112C rotates the tool spindle 12 with the axial direction of the tool spindle 12 being the center of rotation.

The movable body 20 includes, for example, a tool rest 21. The tool rest 21 is configured to be able to hold a tool for cutting a workpiece. The tool rest 21 includes a turret 22. The turret 22 is turnable about the Z direction.

The turret 22 has a configuration in which a plurality of tools can be mounted on the turret 22. The tools are held on the turret 22 at intervals in the circumferential direction of the axis in the Z direction. As the result of the turret 22 turning about the Z direction, the tools move in the circumferential direction.

The movable body 20 includes a guide G2Z serving as a drive mechanism for driving the tool rest 21 in the Z direction. The guide G2Z is composed of, for example, two rails and functions as a guide surface for guiding the tool rest 21 in the Z direction. The rails are provided in parallel to the Z direction. A ball screw B2Z is provided between the rails. The ball screw B2Z is provided in parallel to the Z direction. Also, a later-described motor 122Z (see FIG. 6) is connected to the ball screw B2Z. The motor 122Z drives the ball screw B2Z to move the tool rest 21 to a desired position in the Z direction.

A guide G2XY is provided on the guide G2Z. In the example of FIG. 2, the guide G2Z is inclined with respect to the Y direction, and thus the guide G2XY, which is provided on the guide G2Z, is also inclined with respect to the Y direction. The guide G2XY is composed of, for example, two rails and functions as a guide surface for guiding the tool rest 21 in the inclination direction of the guide G2XY The rails are provided in parallel to each other. A ball screw (not shown) is provided between the rails. The ball screw is provided in parallel to the guide G2XY Also, a later-described motor 122XY (see FIG. 6) is connected to the ball screw. The motor 122XY drives the ball screw to move the tool rest 21 to a desired position in the inclination direction of the guide G2XY

The movable body 30 includes, for example, a workpiece spindle 31 and an opposing workpiece spindle 36. The workpiece spindle 31 and the opposing workpiece spindle 36 are configured to be able to hold a workpiece. The workpiece spindle 31 and the opposing workpiece spindle 36 are provided so as to face each other in the Z direction. The workpiece spindle 31 and the opposing workpiece spindle 36 are provided mainly to rotate a workpiece when performing lathe turning processing on the workpiece using a fixed tool.

The workpiece spindle 31 is fixed to the bed 5 and is provided so as to be rotatable about an axis that is parallel to the Z direction. The opposing workpiece spindle 36 is provided so as to be rotatable about an axis that is parallel to the Z direction.

The opposing workpiece spindle 36 is configured to be movable along the guide G2Z. In the example of FIG. 2, the guide G2Z is used by both the tool rest 21 and the opposing workpiece spindle 36, but a configuration is also possible in which guides are respectively provided for the tool rest 21 and the opposing workpiece spindle 36.

The guide G2Z functions as a guide surface for guiding the opposing workpiece spindle 36 in the Z direction, for example. A ball screw B3Z is provided between the rails constituting the guide G2Z. The ball screw B3Z is provided in parallel to the Z direction. Also, a later-described motor 132Z (see FIG. 6) is connected to the ball screw B3Z. The motor 132Z drives the ball screw B3Z to move the opposing workpiece spindle 36 to a desired position in the Z direction.

### C. Supporting Mechanism of Bed 5

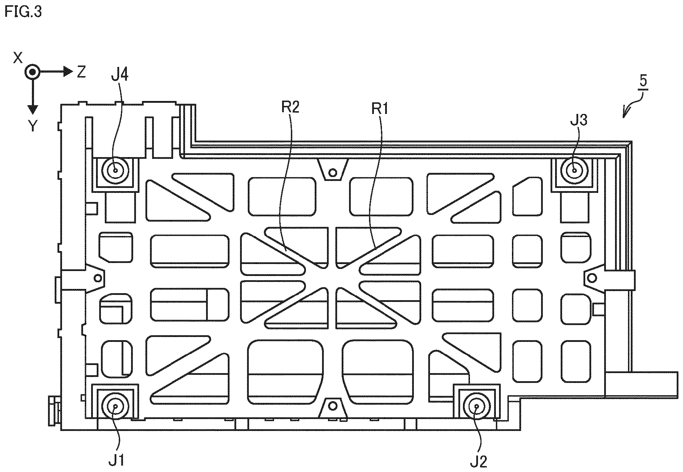

Next, the supporting mechanism of the bed 5 is described with reference to FIG. 3. FIG. 3 is a diagram showing an underside of the bed 5 shown in FIG. 2.

The bed 5 is supported by four or more supporting mechanisms. FIG. 3 shows jacks J1 to J4 as examples of the supporting mechanisms. Hereinafter, when the jacks J1 to J4 are not particularly distinguished from each other, the jacks J1 to J4 are collectively referred to as jacks J.

The jacks J are mechanisms for adjusting the height of the bed 5. The jacks J may be mechanical jacks, hydraulically-actuated jacks, or pneumatically-actuated jacks.

The jacks J1 to J4 are respectively provided in four corners of the underside of the bed 5. An operator can manually adjust the heights of the jacks J1 to J4 to perform fine adjustment of the inclination of the bed 5.

Ribs R1 and R2 are each connected to two of the jacks J1 to J4 that are located in opposing corners to enhance the rigidity of the bed 5. The ribs R1 and R2 are reinforcement members for suppressing the bending of the bed 5.

In the example of FIG. 3, two ends of the rib R1 are coupled to the jacks J1 and J3, which are located in first opposing corners, among the jacks J1 to J4. That is to say, one end of the rib R1 is coupled to the jack J1, and the other end of the rib R1 is coupled to the jack J3. This enhances the rigidity of the bed 5, and can make the bed 5 more stable.

Also, two ends of the rib R2 are coupled to the jacks J2 and J4, which are located in second opposing corners, among the jacks J1 to J4. That is to say, one end of the rib R2 is coupled to the jack J2, and the other end of the rib R2 is coupled to the jack J4. This further enhances the rigidity of the bed 5, and can make the bed 5 more stable.

Note that not only jacks located in opposing corners but also jacks adjacent to each other may be coupled to each other with ribs. As an example, the jacks J1 and J2 may be coupled to each other by a rib. Alternatively, the jacks J2 and J3 may be coupled to each other by a rib. Alternatively, the jacks J3 and J4 may be coupled to each other by a rib. Alternatively, the jacks J1 and J4 may be coupled to each other by a rib.

Also, the number of jacks provided on the back side of the bed 5 is not limited to four. Five or more jacks may also be provided on the back side of the bed 5. When five or more jacks are provided, the jacks J1 to J4 are four outermost jacks from among all the jacks, and the remaining one or more jacks other than the jacks J1 to J4 supplementarily support the bed 5. At this time, the weights applied to the main jacks J1 to J4 are greater than the weights applied to the remaining one or more supplementary jacks.

### D. Moving Range of Movable Body

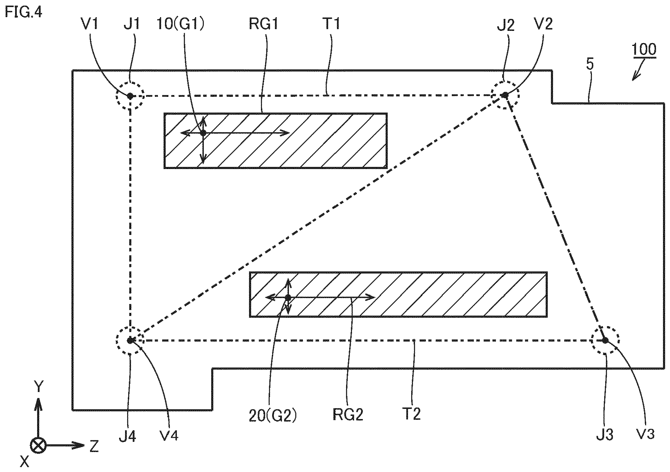

Next, moving ranges of the above-described movable bodies 10 and 20 are described with reference to FIG. 4. FIG. 4 is a diagram showing examples of the moving ranges of movable bodies 10 and 20.

A moving range RG1 of a gravity center G1 of the movable body 10 is confined within a triangle T1 in which three of the jacks J1 to J4 are disposed at the vertices when the machine tool 100 is viewed from the top. Also, a moving range RG2 of a gravity center G2 of the movable body 30 is confined within a triangle T2 in which three of the jacks J1 to J4 are disposed at the vertices when the machine tool 100 is viewed from the top. Note that FIG. 4 shows an example in which the triangles T1 and T2 do not overlap each other, but one of the triangles T1 and T2 may partially overlap the other triangle.

Here, the expression "when the machine tool 100 is viewed from the top" means that the various components of the machine tool 100 (such as, e.g., the movable bodies, the jacks, and the bed) are projected onto a horizontal plane in the direction of gravity.

Combinations of three jacks constituting the respective triangles T1 and T2 may differ from each other. That is to say, each of the triangles T1 and T2 is formed with three jacks in a suitable combination being at the vertices.

As an example, the jacks J1, J2, and J4 are at the vertices of the triangle T1. For example, the jacks J2, J3, and J4 are at the vertices of the triangle T2.

More specifically, in the triangle T1, a representative point V1 of the jack J1, a representative point V2 of the jack J2, and a representative point V4 of the jack J4 are at the vertices. In the triangle T2, a representative point V2 of the jack J2, a representative point V3 of the jack J3, and a representative point V4 of the jack J4 are at the vertices.

The representative point V1 may be the gravity center of the jack J1, the center point of the jack J1 when viewed in a top view, or another point inside the jack J1. The representative point V2 may be the gravity center of the jack J2, the center point of the jack J2 when viewed in the top view, or another point inside the jack J2. The representative point V3 may be the gravity center of the jack J3, the center point of the jack J3 when viewed in the top view, or another point inside the jack J3. The representative point V4 may be the gravity center of the jack J4, the center point of the jack J4 when viewed in the top view, or another point inside the jack J4.

If the gravity center G1 of the movable body 10 moves from the inside of the triangle T1 to the inside of the triangle T2, the combination of jacks mainly supporting the movable body 10 changes from the jacks J1, J2, and J4 to the jacks J2, J3, and J4. Similarly, if the gravity center G2 of the movable body 30 moves from the inside of the triangle T2 to the inside of the triangle T1, the combination of jacks mainly supporting the movable body 10 changes from the jacks J2, J3, and J4 to the jacks J1, J2, and J4. This causes a slight change in bending of the bed 5.

Accordingly, the machine tool 100 has a configuration in which the moving range RG1 of the gravity center G1 of the movable body 10 (first movable body) is confined within the triangle T1 (first triangle) when the machine tool 100 is viewed from the top, and the moving range RG2 of the gravity center G2 of the movable body 20 (second movable body) is confined within the triangle T2 (second triangle) when the machine tool 100 is viewed from the top. With this, a change in bending of the bed 5 due to the movement of the movable bodies 10 and 20 is suppressed, and the bed 5 can be made more stable. As a result, accuracy in processing of a workpiece is improved.

Note that the method of confining the moving range RG1 of the movable body 10 within the triangle T1 is not particularly limited. As an example, the positions of the jacks J1, J2, and J4 may be adjusted based on the moving range RG1 of the movable body 10, or the moving range RG1 of the movable body 10 may be adjusted based on the positions of the jacks J1, J2, and J4. In one aspect, the lengths of the ball screws of the movable body 10 in the Y direction or the Z direction are adjusted in design according to the mounting positions of the jacks J1, J2, and J4. Alternatively, the moving range of the movable body 10 in the Y direction or the Z direction may be restricted using software according to the mounting positions of the jacks J1, J2, and J4.

Similarly, the method of confining the moving range RG2 of the movable body 20 within the triangle T2 is not particularly limited. As an example, the positions of the jacks J2, J3, and J4 may be adjusted based on the moving range RG2 of the movable body 20, or the moving range RG2 of the movable body 20 may be adjusted based on the positions of the jacks J2, J3, and J4. In one aspect, the lengths of the ball screws of the movable body 20 in the Y direction or the Z direction are adjusted in design according to the mounting positions of the jacks J2, J3, and J4. Alternatively, the moving range of the movable body 20 in the Y direction or the Z direction may be restricted using software according to the mounting positions of the jacks J2, J3, and J4.

Also, the types of the movable bodies 10 and 20 are not particularly limited as long as they are members that move on the bed 5. As an example, the movable body 10 includes the above-described tool spindle 12 (see FIG. 2) for rotating a tool. The movable body 20 includes the above-described tool rest 21 (see FIG. 2) for holding a plurality of tools.

Also, although FIG. 4 shows an example in which the movable body 10 is driven in both of the Y direction and the Z direction, the movable body 10 may be driven only in either the Y direction or the Z direction. In other words, the moving range RG1 of the movable body 10 does not need to be two-dimensional, but may be one-dimensional.

Similarly, although FIG. 4 shows an example in which the movable body 20 is driven in both of the Y direction and the Z direction, the movable body 20 may be driven only in either the Y direction or the Z direction. In other words, the moving range RG2 of the movable body 20 does not need to be two-dimensional, but may be one-dimensional.

### E. Modification

In the above description given with reference to FIG. 4, an example is taken where the moving ranges RG1 and RG2 of the movable bodies 10 and 20 are respectively confined within the triangles T1 and T2 when the bed 5 is viewed from the top, but the movable bodies whose moving ranges are confined within the triangles T1 and T2 are not limited to the movable bodies 10 and 20. The number of movable bodies confined within the triangle T1 may be two or more, and the number of movable bodies confined within the triangle T2 may be two or more.

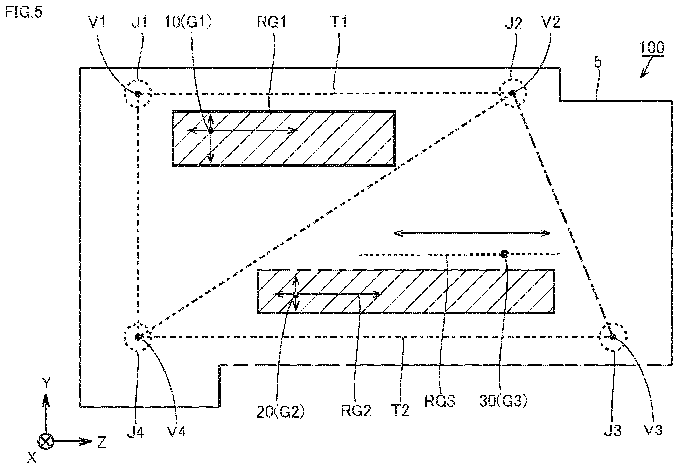

FIG. 5 is a diagram showing examples of the moving ranges of the movable bodies 10, 20, and 30. In the example of FIG. 5, not only the moving range RG2 of the gravity center G2 of the movable body 20 but also a moving range RG3 of the gravity center G3 of the movable body 30 are confined within the triangle T2. Accordingly, the machine tool 100 has a configuration in which the moving range RG3 of the gravity center G3 of the movable body 30 (third movable body) is confined within the triangle T2 (second triangle) when the machine tool 100 is viewed from the top. With this, a change in bending of the bed 5 due to the movement of the movable bodies 10, 20, and 30 is suppressed, and the bed 5 can be made more stable.

Note that the method of confining the moving range RG3 of the movable body 30 within the triangle T2 is not particularly limited. As an example, the positions of the jacks J2, J3, and J4 may be adjusted based on the moving range RG3 of the movable body 30, or the moving range RG3 of the movable body 30 may be adjusted based on the positions of the jacks J2, J3, and J4. In one aspect, the lengths of the ball screws of the movable body 30 in the Y direction or the Z direction are adjusted in design according to the mounting positions of the jacks J2, J3, and J4. Alternatively, the moving range of the movable body 30 in the Y direction or the Z direction may be restricted using software according to the mounting positions of the jacks J2, J3, and J4.

Also, the type of the movable body 30 is not particularly limited as long as it is a member that moves on the bed 5. As an example, the movable body 30 includes the above-described workpiece spindle 31 (see FIG. 2) for rotating a workpiece.

Also, although FIG. 5 shows an example in which the movable body 30 is driven in the Z direction, the movable body 30 may be driven in two or more directions. In other words, the moving range RG3 of the gravity center G3 of the movable body 30 does not need to be one-dimensional, but may be two-dimensional.

### F. Drive Mechanism of Machine Tool 100

Next, various configurations of the machine tool 100 are described with reference to FIG. 6. FIG. 6 is a diagram showing examples of drive mechanisms of the machine tool 100.

As shown in FIG. 6, the machine tool 100 includes the movable bodies 10, 20, and 30, a control unit 50, and drive units 110, 120, and 130.

The movable body 10 includes, for example, the tool spindle 12. The movable body 20 includes, for example, the tool rest 21. The movable body 30 includes, for example, the workpiece spindle 31 and the opposing workpiece spindle 36.

The control unit 50 is a device for controlling the machine tool 100. There is no limitation to the device configuration of the control unit 50. The control unit 50 may be constituted by a single control unit or a plurality of control units. As an example, the control unit 50 is constituted by a central processing unit (CPU) such as a programmable logic controller (PLC), a CNC unit, or the like.

The control unit 50 drives the drive units 110, 120, and 130 in accordance with a pre-designed processing program, for example, and processes a workpiece.

The drive unit 110 (first drive unit) is a drive mechanism for moving the movable body 10. There is no limitation to the device configuration of the drive unit 110. The drive unit 110 may be constituted by a single drive unit or a plurality of drive units. In the example of FIG. 6, the drive unit 110 is constituted by motor drivers 111B, 111C, 111X, 111Y, and 111Z, and the motors 112B, 112C, 112X, 112Y, and 112Z.

The motor driver 111B successively receives input of a target rotational speed from the control unit 50, and controls the motor 112B. The motor 112B drives and rotates the tool spindle 12 about the Y direction. The motor 112B may be an AC motor, a stepping motor, a servomotor, or any other type of motor.

In the case where the motor 112B is a servomotor, the motor driver 111B calculates an actual rotational speed of the motor 112B based on a feedback signal received from an encoder (not shown) for detecting a rotation angle of the motor 112B. When the calculated actual rotational speed is lower than the target rotational speed, the motor driver 111B increases the rotational speed of the motor 112B, and when the calculated actual rotational speed is higher than the target rotational speed, the motor driver 111B reduces the rotational speed of the motor 112B. As described above, the motor driver 111B makes the rotational speed of the motor 112B closer to the target rotational speed by successively receiving feedback about the rotational speed of the motor 112B.

The motor driver 111C successively receives input of a target position from the control unit 50, and controls the motor 112C. The motor 112C drives and rotates the tool spindle 12 with the axial direction of the tool spindle 12 being the center of rotation. The motor 112C may be an AC motor, a stepping motor, a servomotor, or any other type of motor. The method for controlling the motor 112C by the motor driver 111C is similar to that described above about the motor driver 111B, and a redundant description thereof is omitted.

The motor driver 111X successively receives input of a target position from the control unit 50, and controls the motor 112X. The motor 112X performs feed drive of the tool spindle 12 via the above-described ball screw B1X (see FIG. 2) to move the tool spindle 12 to a desired position in the X direction. The motor 112X may be an AC motor, a stepping motor, a servomotor, or any other type of motor. The method for controlling the motor 112X by the motor driver 111X is similar to that described above about the motor driver 111B, and a redundant description thereof is omitted.

The motor driver 111Y successively receives input of a target position from the control unit 50, and controls the motor 112Y The motor 112Y performs feed drive of the tool spindle 12 via the above-described ball screw B1Y (see FIG. 2) to move the tool spindle 12 to a desired position in the Y direction. The motor 112Y may be an AC motor, a stepping motor, a servomotor, or any other type of motor. The method for controlling the motor 112Y by the motor driver 111Y is similar to that described above about the motor driver 111B, and a redundant description thereof is omitted.

The motor driver 111Z successively receives input of a target position from the control unit 50, and controls the motor 112Z. The motor 112Z performs feed drive of the tool spindle 12 via the above-described ball screw B1Z (see FIG. 2) to move the tool spindle 12 to a desired position in the Z direction. The motor 112Z may be an AC motor, a stepping motor, a servomotor, or any other type of motor. The method for controlling the motor 112Z by the motor driver 111Z is similar to that described above about the motor driver 111B, and a redundant description thereof is omitted.

The drive unit 120 (second drive unit) is a drive mechanism for moving the movable body 20. There is no limitation to the device configuration of the drive unit 120. The drive unit 120 may be constituted by a single drive unit or a plurality of drive units. In the example of FIG. 6, the drive unit 120 is constituted by motor drivers 121C, 121XY, and 121Z, and motors 122C, 122XY, and 122Z.

The motor driver 121C successively receives input of a target position from the control unit 50, and controls the motor 122C. The motor 122C drives and turns the tool rest 21 with the Z direction being the center of rotation. The motor 122C may be an AC motor, a stepping motor, a servomotor, or any other type of motor. The method for controlling the motor 122C by the motor driver 121C is similar to that described above about the motor driver 111B, and a redundant description thereof is omitted.

The motor driver 121XY successively receives input of a target position from the control unit 50, and controls the motor 122XY The motor 122XY performs feed drive of the tool rest 21 via a ball screw (not shown) to move the tool rest 21 to a desired position in a direction inclined with respect to the Y direction. The motor 122XY may be an AC motor, a stepping motor, a servomotor, or any other type of motor. The method for controlling the motor 122XY by the motor driver 121XY is similar to that described above about the motor driver 111B, and a redundant description thereof is omitted.

The motor driver 121Z successively receives input of a target position from the control unit 50, and controls the motor 122Z. The motor 122Z performs feed drive of the tool rest 21 via the above-described ball screw B2Z (see FIG. 2) to move the tool rest 21 to a desired position in the Z direction. The motor 122Z may be an AC motor, a stepping motor, a servomotor, or any other type of motor. The method for controlling the motor 122Z by the motor driver 121Z is similar to that described above about the motor driver 111B, and a redundant description thereof is omitted.

The drive unit 130 (third drive unit) is a drive mechanism for moving the movable body 30. There is no limitation to the device configuration of the drive unit 130. The drive unit 130 may be constituted by a single drive unit or a plurality of drive units. In the example of FIG. 6, the drive unit 130 is constituted by motor drivers 131C and 131Z, and motors 132C and 132Z.

The motor driver 131C successively receives input of a target position from the control unit 50, and controls the motor 132C. The motor 132C drives and rotates the workpiece spindle 31 with the axial direction of the workpiece spindle 31 (that is, the Z direction) being the center of rotation. The motor 132C may be an AC motor, a stepping motor, a servomotor, or any other type of motor. The method for controlling the motor 132C by the motor driver 131C is similar to that described above about the motor driver 111B, and a redundant description thereof is omitted.

The motor driver 131Z successively receives input of a target position from the control unit 50, and controls the motor 132Z. The motor 132Z performs feed drive of the opposing workpiece spindle 36 via the above-described ball screw B3Z (see FIG. 2) to move the opposing workpiece spindle 36 to a desired position in the Z direction. The motor 132Z may be an AC motor, a stepping motor, a servomotor, or any other type of motor. The method for controlling the motor 132Z by the motor driver 131Z is similar to that described above about the motor driver 111B, and a redundant description thereof is omitted.

### G. Hardware Configuration of CNC Unit 300

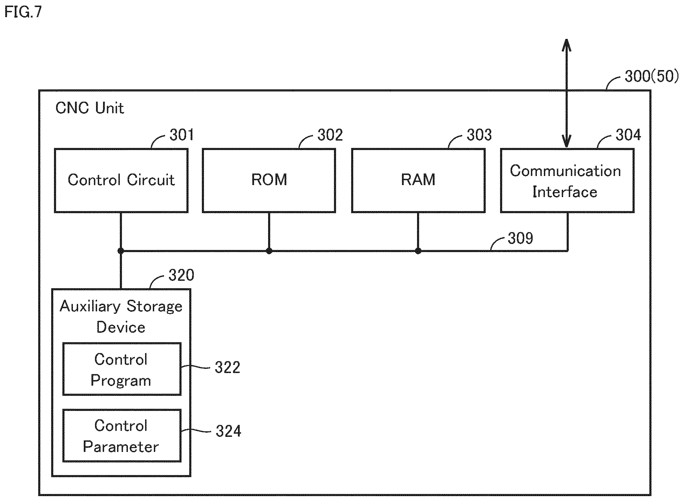

Next, a hardware configuration of a CNC unit 300, which is an example of the control unit 50 shown in FIG. 6, is described with reference to FIG. 7. FIG. 7 is a diagram showing an example of the hardware configuration of the CNC unit 300.

The CNC unit 300 includes a control circuit 301, a ROM 302, a RAM 303, a communication interface 304, and an auxiliary storage device 320. These components are connected to an internal bus 309.

The control circuit 301 is constituted by, for example, at least one integrated circuit. The integrated circuit may be configured by, for example, at least one CPU, at least one graphics processing unit (GPU), at least one application specific integrated circuit (ASIC), at least one field programmable gate array (FPGA), a combination thereof, or the like.

The control circuit 301 controls the operation of the CNC unit 300 by executing various types of programs such as a control program 322. The control program 322 includes, for example, a workpiece processing program, and the like. The control circuit 301 reads the control program 322 from the ROM 302 to the RAM 303 upon accepting an instruction to execute the control program 322. The RAM 303 functions as a working memory and temporarily stores various types of data necessary for execution of the control program 322.

The communication interface 304 is an interface for realizing wired or wireless communication with other devices. As an example, the CNC unit 300 communicates with various drive units (such as, for example, the above-described drive units 110, 120, and 130) for realizing processing of a workpiece via the communication interface 304.

The auxiliary storage device 320 is a storage medium such as a hard disk or a flash memory, for example. The auxiliary storage device 320 stores the control program 322, control parameters 324, and the like. The control parameters 324 are parameters that are referenced by the control circuit 301 when the control program 322 is executed. The storage location of the control program 322 and the control parameters 324 is not limited to the auxiliary storage device 320, and may be stored in a storage area of the control circuit 301 (for example, cache memory), the ROM 302, the RAM 303, an external device (for example, a server), or the like.

### H. Flowchart

As described above, the moving range of each movable body on the bed 5 is confined within a triangle in which three jacks are at the vertices when the machine tool 100 is viewed from the top. At this time, the moving ranges may be restricted using hardware or using software.

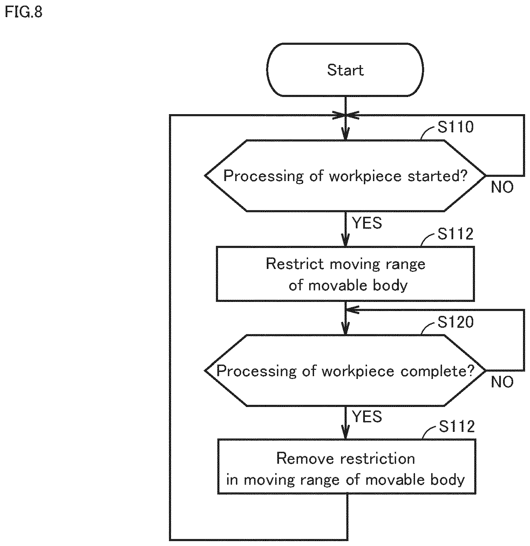

The following describes processing of restricting the moving ranges of the movable bodies on the bed 5 using software, with reference to FIG. 8. FIG. 8 is a flowchart showing a flow of the processing of restricting the moving ranges of the movable bodies.

The processing shown in FIG. 8 is specified by the above-described control program 322 and is executed by the control unit 50 of the machine tool 100. Note that a part or all of the processing shown in FIG. 8 may be executed by a circuit element or another piece of hardware.

In step S110, the control unit 50 determines whether or not processing of a workpiece has been started. As an example, the control unit 50 determines that the processing has been started based on the fact that execution of a workpiece processing program has been started. If it is determined that processing of a workpiece has been started (YES, in step S110), the control unit 50 switches control to step S112. Otherwise (NO, in step S110), the control unit 50 again executes the processing in step S110.

In step S112, the control unit 50 restricts the moving ranges of the various movable bodies provided on the bed 5 of the machine tool 100.

As an example, the control unit 50 controls the above-described drive unit 110 so that the moving range of the gravity center of the movable body 10 while a tool is processing the workpiece is confined within the above-described triangle T1. The moving range of the movable body 10 after the restriction is defined in advance in the above-described control parameters 324 or the like, for example. The control parameters 324 include, for example, upper and lower limits of the moving range of the movable body 10 in the horizontal direction (e.g., Y and Z directions).

As another example, the control unit 50 controls the above-described drive unit 120 so that the moving range of the gravity center of the movable body 20 while the tool is processing the workpiece is confined within the above-described triangle T2. The moving range of the movable body 20 after the restriction is defined in advance in the above-described control parameters 324 or the like, for example. The control parameters 324 include, for example, upper and lower limits of the moving range of the movable body 20 in the horizontal direction (e.g., Y and Z directions).

As yet another example, the control unit 50 controls the above-described drive unit 130 so that the moving range of the gravity center of the movable body 30 while the tool is processing the workpiece is confined within the above-described triangle T2. The moving range of the movable body 30 after the restriction is defined in advance in the above-described control parameters 324 or the like, for example. The control parameters 324 include, for example, upper and lower limits of the moving range of the movable body 30 in the horizontal direction (e.g., Z direction).

In step S120, the control unit 50 determines whether or not the processing of the workpiece is complete. As an example, the control unit 50 determines that the processing of the workpiece is complete based on the fact that execution of the last line in the processing program has been completed. If it is determined that the processing of the workpiece is complete (YES, in step S120), the control unit 50 switches control to step S122. Otherwise (NO, in step S120), the control unit 50 again executes the processing in step S120.

In step S122, the control unit 50 removes the restrictions in the moving ranges of the movable bodies set in step S112. Then, the control unit 50 returns control to step S110.

### I. Summary

As described above, the machine tool 100 has a configuration in which the moving range RG1 of the gravity center G1 of the movable body 10 is confined within the triangle T1 when the machine tool 100 is viewed from the top, and the moving range RG2 of the gravity center G2 of the movable body 20 is confined within the triangle T2 when the machine tool 100 is viewed from the top. With this, a change in bending of the bed 5 due to the movement of the movable body 10, 20 is suppressed, and the bed 5 can be made more stable. As a result, accuracy in processing of a workpiece is improved.

The disclosed embodiment is an illustrative example in all aspects and should not be considered as restrictive. The scope of the present invention is defined not by the above descriptions but by the claims, and is intended to encompass all modifications within the meanings and scope that are equivalent to the claims.

### List of Reference Numerals

- 5: Bed
- 10: Movable body
- 11: Column
- 12: Tool spindle
- 20: Movable body
- 21: Tool rest
- 22: Turret
- 30: Movable body
- 31: Workpiece spindle
- 36: Opposing workpiece spindle
- 50: Control unit
- 100: Machine tool
- 110: Drive unit
- 111B: Motor driver
- 111C: Motor driver
- 111X: Motor driver
- 111Y: Motor driver
- 111Z: Motor driver
- 112B: Motor
- 112C: Motor
- 112X: Motor
- 112Y: Motor
- 112Z: Motor
- 120: Drive unit
- 121C: Motor driver
- 121XY: Motor driver
- 121Z: Motor driver
- 122C: Motor
- 122XY: Motor
- 122Z: Motor
- 130: Drive unit
- 131C: Motor driver
- 131Z: Motor driver
- 132C: Motor
- 132Z: Motor
- 170: Magazine
- 300: CNC unit
- 301: Control circuit
- 302: ROM
- 303: RAM
- 304: Communication interface
- 309: Internal bus
- 320: Auxiliary storage device
- 322: Control program
- 324: Control parameter

## Claims

1. A machine tool comprising:
a bed;
first and second movable bodies supported so as to be movable with respect to the bed; and
first to fourth jacks configured to support the bed,
wherein a moving range of a gravity center of the first movable body is confined within a first triangle in which three of the first to fourth jacks are at vertices thereof when the machine tool is viewed from the top,
a moving range of a gravity center of the second movable body is confined within a second triangle in which three of the first to fourth jacks are at vertices thereof when the machine tool is viewed from the top, and
a combination of the three jacks forming the first triangle and a combination of the three jacks forming the second triangle differ from each other.

2. The machine tool according to claim 1, further comprising,
a first rib,
wherein two ends of the first rib are coupled to, among the first to fourth jacks, jacks located in first opposing corners.

3. The machine tool according to claim 2, further comprising,
a second rib,
wherein two ends of the second rib are coupled to, among the first to fourth jacks, jacks located in second opposing corners, and
the first opposing corners and the second opposing corners differ from each other.

4. The machine tool according to any one of claims 1 to 3,
wherein the first movable body includes a tool spindle for rotating a tool, and
the second movable body includes a tool rest for holding a plurality of tools.

5. The machine tool according to any one of claims 1 to 4, further comprising,
a third movable body supported so as to be movable with respect to the bed,
wherein a moving range of a gravity center of the third movable body is confined within the second triangle when the machine tool is viewed from the top.

6. The machine tool according to claim 5,
wherein the third movable body includes a workpiece spindle for rotating a workpiece.

7. The machine tool according to any one of claims 1 to 6, further comprising,
a first drive unit configured to move the first movable body; and
a control unit configured to control the machine tool,
wherein the control unit executes processing for controlling the first drive unit so that the moving range of the gravity center of the first movable body while a tool is processing a workpiece is confined within the first triangle.

8. The machine tool according to claim 7, further comprising,
a second drive unit configured to move the second movable body,
wherein the control unit further executes processing for controlling the second drive unit so that the moving range of the gravity center of the second movable body while a tool is processing a workpiece is confined within the second triangle.
